# EUROPEAN PATENT SPECIFICATION

(11) **EP 0 917 304 B1**
(45) Date of publication and mention of the grant of the patent: **07.03.2007**
(21) Application number: 98121538.7
(22) Date of filing: 17.11.1998
(51) Int. Cl.: H04B 7/005

(54) **Transmission power control method and communication device**
Verfahren zur Steuerung der Sendeleistung und Kommunikationsvorrichtung
Procédé de contrôle de la puissance d'émission et dispositif de communication

(30) Priority: 18.11.1997 JP 31724397
(43) Date of publication of application: 19.05.1999
(73) Proprietor: NEC CORPORATION, Tokyo (JP)
(72) Inventor: Mochizuki, Takashi, c/o NEC Corporation, Minato-ku, Tokyo (JP)
(74) Representative: Vossius & Partner

(56) References cited:
- EP-A- 0 462 952
- EP-A- 0 565 507
- US-A- 5 613 228

## Description

The present invention relates to a transmission power control method and a communication device adapted from that method. More specifically, the present invention relates to a transmission power control method and a communication device for packet transmission or random access in communication devices using the Direct Sequence Code Division Multiple Access (DS-CDMA) architecture.

Random access communication systems using DS-CDMA include those derived from the TIA/EIA/IS-95-A standard for use in the United States, "Mobile-Station Compatibility Standard for Dual-Mode Wideband Spread Spectrum Cellular System", May 1995. The system set forth in this standard is herein referred to an IS-95 system. For transmission of data in a random access manner, a communication device using the IS-95 system transmits the data repeatedly with increased transmission power until it receives a data acknowledge signal (ACK) from a receiving station indicating successful receipt of the transmitted data. At the time when the transmission power reaches a predetermined maximum value, the transmission power is reset to an initial value to continue transmission. The initial value for the transmission power is determined at the transmitting station depending on received power of signals transmitted from the receiving station.

The packet transmission supplies data in some cases as in the random access transmission. Two control systems have been proposed for the packet transmission in TRANSACTIONS OF THE IEICE, Japan 1997, pages 420 and 422. The former one is referred herein as a control system A and the latter a control system B. These systems employ different power control methods at the beginning of a transmission. The transmission power is controlled in either system according to control signals supplied from a receiving station after the second time slots of the transmission. Transmission begins with an initial value for the transmission power determined depending on the received signal power in the control system A. The receiving station supplies more control signals during the first time slot than during the second and later time slots. On the other hand, the control system B involves exchanging reservation packets between a transmitting station (sender) and a receiving station (receiver). The receiving station determines the initial transmission power of the transmitting station depending on the received signal power of the reservation packet and then notifies the transmitting station of the initial transmission power.

Conventional transmission power control methods using the above-mentioned IS-95 system transmit data several times with the power not being adjusted properly. Thus the transmission interferes significantly with other communication channel(s) that use(s) the same frequency range as the communication device in question. It is understood that the larger the transmission power the more significantly the other channel(s) is/are interfered. Reduction of the transmission power may be a solution to this problem. However, smaller transmission power results in a longer period required for repeated transmission of data before it is received correctly. This means that the other channel(s) is/are interfered for a longer period.

As apparent from the above, once the initial value for the transmission power and an incrementing amount for the transmission power are determined, the transmission power is increased, while reset to the initial value a number of times, until the transmitting station receives the data acknowledge signal (ACK) from the receiving station. Accordingly, data are transmitted an increased number of times, interfering with other channel(s) for a longer period. Briefly, the above-mentioned prior arts have no mechanism to adjust the transmission power properly. This would be a cause of such a longer interference period.

In addition, the amount of interference also increases due to the repeated transmission of data. In the above-mentioned prior arts, data are transmitted at the increased number of times until the transmission power becomes a proper level. The amount of interference increases as well with the increased number of transmissions.

The conventional transmission power control methods using the above-mentioned IS-95 system waste much power and thus dissipate a significant amount of power, sacrificing battery lifetime. The above-mentioned control system A begins data transmission after an initial value for the transmission power is determined depending on the received signal power. With an improper initial value, other communication channel(s) that use(s) the same frequency band range can be interfered.

The above-mentioned control system B has a problem in determining the transmission power of reservation packets. More specifically, excessively large power for reservation packets may cause interference with other communication channel(s), while reservation packets with smaller power may fail to be received by a receiving station and then they will be retransmitted. In addition, the dynamic range that is used to indicate the initial transmission power should be sufficient.

US-A-5 613 228 describes a method for minimizing the power used by a remote transceiver in 2-way communication between local and remote transceivers.

### SUMMARY OF THE INVENTION

An object of the present invention is to provide a transmission power control method and a communication device that transmit no signal with improper power, eliminate wasteful transmission, and reduce interference, if any, with other communication channel(s). The object of the present invention is achieved with the features of the claims.

A transmission power control method according to the present invention comprises: measuring received power of signals transmitted from a receiving station; determining an initial value of transmission power according to a measurement value of the received power; and initiating transmission of a signal with the transmission power set to the determined initial value. In this method, during the transmission, the transmission power is increased until the receiving station returns a receipt acknowledge signal to the transmitting station and the transmitting station detects the receipt acknowledge signal. The initial value is decreased when the received power in the current communication is larger than that in the previous communication, while the initial value is increased when the received power in the current communication is smaller than that in the previous communication. The initial value is changed at a smaller rate in increase than in decrease.

A communication device according to the present invention comprises: a receiving unit for receiving signals from a receiving station; a power measuring unit for measuring power of the received signals; a acknowledge signal detection unit for detecting a receipt acknowledge signal in the received signals; an initial value determining unit for determining an initial value of transmission power according to the received signal power measured by the power measuring unit such that the initial value is decreased when the power of received signals in the current communication is larger than that in the previous communication, while it is increased when the power of received signals in the current communication is smaller than that in the previous communication, and such that the initial value is changed at a smaller rate in increase than in decrease; and a transmitting unit that initiates transmission of data with the initial value of transmission power determined by the initial value determining unit, increasing gradually the transmission power until being notified of detection of the receipt acknowledge signal.

In the present invention, the initial value of transmission power is carefully controlled. The initial value is decreased when the received power of signals in the current communication is larger than that in the previous communication. Any interference with other communication channel(s) can thus be reduced. On the other hand, the initial value is increased when the received power of signals in the current communication is smaller than that in the previous communication. Because the increase rate of transmission power is set smaller than the decrease rate, any interference with other communication channel(s) can also be reduced.

According to the present invention, an increment value of transmission power is made larger, when the measured value of the received signal power in the current communication is smaller than that in the previous communication, than that when the measured value of the received signal power in the current communication is larger than that in the previous communication.

In the present invention, the increment value of transmission power is carefully controlled. Because the initial value of transmission power in the present invention is increased in a relatively small amount, a larger number of times will be required for updating the power to a sufficient level for receiving if the increment value is the same. With this respect, the increment value is made large when the measured value of the received signal power in the current communication is smaller than that in the previous communication. This makes possible to reduce the number of times required for updating the transmission power to a sufficient level for receiving.

According to the present invention, a test signal is transmitted until the acknowledge signal detection unit detects a receipt acknowledge signal. In response to detection of a receipt acknowledge signal, the data which want to be transmitted are transmitted with the transmission power at the time of detecting the receipt acknowledge signal.

Furthermore, in the present invention, the test signal is used to obtain the desired transmission power. The test signal may be a signal that lasts for a shorter period than the object data . This allows reduction of any interference with other communication channel(s).

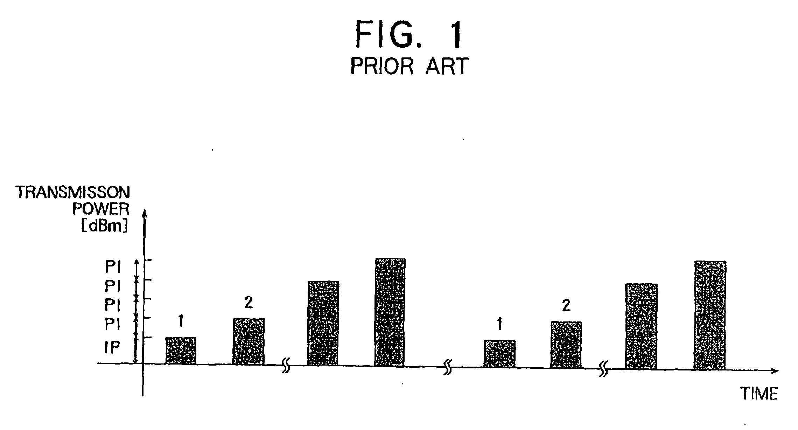

Fig. 1 is a time characteristic diagram that indicates state of data transmission for use in describing operation of a prior art;
Fig. 2 is a block diagram of a communication device according to a first embodiment of the present invention;
Fig. 3 is a flow chart for use in describing operation of the communication device according to the first embodiment of the present invention;
Fig. 4 is a time characteristic diagram that indicates state of data transmission for use in describing operation of the communication device according to the first embodiment;
Fig. 5 is a characteristic curve for a transmission power initial value for use in describing operation of the communication device according to the first embodiment;
Fig. 6 is a time characteristic diagram that indicates state of data transmission for use in describing operation of the communication device according to the first embodiment;
Fig. 7 is a characteristic curve for a transmission power increment value for use in describing operation of the communication device according to the first embodiment;
Fig. 8 is a time characteristic diagram that indicates state of data transmission for use in describing operation of the communication device according to the first embodiment; and
Fig. 9 is a block diagram of a communication device according to a second embodiment of the present invention.

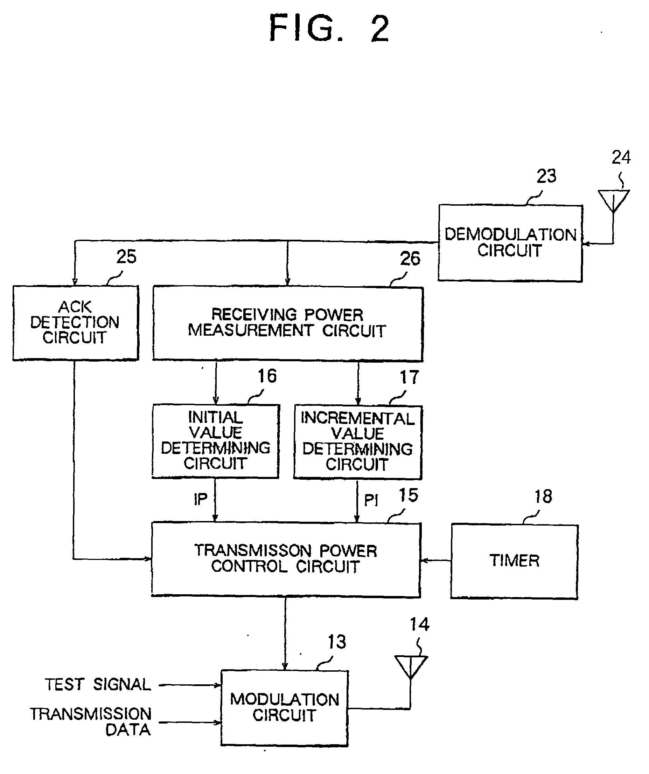

A first embodiment of the present invention is described in detail with reference to the drawings. Referring to Fig. 2, a communication device according to an embodiment of the present invention comprises a receiving antenna 24, a demodulation circuit 23, an ACK detection circuit 25, a receiving power measurement circuit 26, an initial value determining circuit 16, an increment value determining circuit 17, a transmission power control circuit 15, a timer 18, a modulation circuit 13, and a transmission antenna 14.

The receiving power measurement circuit 26 measures power of a signal (receiving power) received by the demodulation circuit 23. The ACK detection circuit 25 determines whether a receipt acknowledge signal ACK is present or not in an output of the demodulation circuit 23. The initial value determining circuit 16 determines a transmission power initial value IP according to a measurement value of the received signal power supplied from the receiving power measurement circuit 26. The initial value determining circuit 16 increases the transmission power initial value IP when the received signal power in the current communication is smaller than that in the previous communication. On the other hand, the initial value determining circuit 16 decreases the transmission power initial value IP when the received signal power in the current communication is larger than that in the previous communication. The initial value determining circuit 16 determines the transmission power initial value IP such that the transmission power initial value IP is changed at a smaller rate in increase than in decrease. The increment value determining circuit 17 makes an increment value PI larger when the received signal power in the current communication is smaller than that in the previous communication, than that when the received signal power in the current communication is larger than that in the previous communication. The transmission power control circuit 15 switches transmission signals between test signals and the data which want to be transmitted. The transmission power control circuit 15 instructs beginning/ending of data transmission as well as the transmission power to the modulation circuit 13. The modulation circuit 13 transmits, according to the instruction from the transmission power control circuit 15, the test signal with the transmission power which is increased gradually from the transmission power initial value IP. In response to detection of the receipt acknowledge signal ACK by the ACK detection circuit 25, the transmission power control circuit 15 instructs to transmit the object data with the transmission power at that time of detection. The test signal used is a known signal that lasts for a shorter period than the object data.

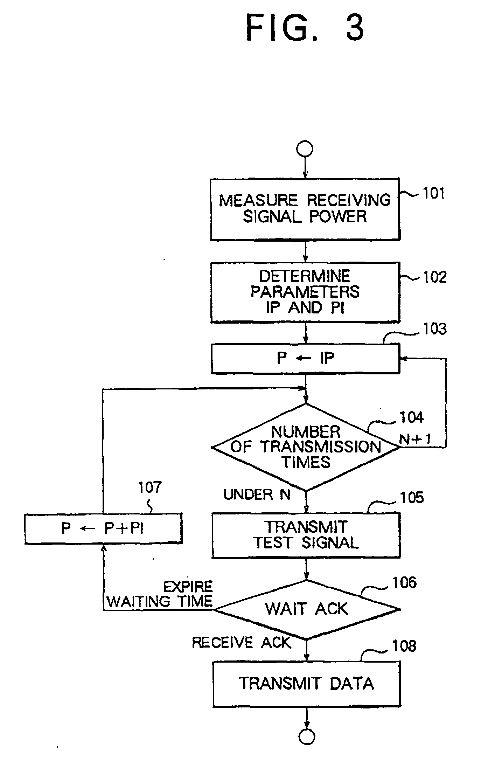

Next, operation of the communication device according to this embodiment is described with reference to Fig. 3. At a processing step 101, the receiving power measurement circuit 26 measures received power of a signal transmitted from a receiving station. At a processing step 102, the initial value determining circuit 16 and the increment value determining circuit 17 determine the initial value IP and the increment value PI for the transmission power, respectively, according to the receiving power measurement value. At a processing step 103, the transmission power control circuit 15 sets expected transmission power P to the initial value IP. At a processing step 104, the transmission power control circuit 15 determines whether the number of transmission times exceeds or not a predetermined number N. When the number of transmission times exceeds a predetermined number N, the operation goes back to the processing step 103. When the number of transmission times does not exceed a predetermined number N, the modulation circuit 13 transmits the test signal with the expected transmission power P (processing step 105). After the transmission of the test signal, at a processing step 106, the transmission power control circuit 15 waits for receiving the receipt acknowledge signal ACK from the receiving station for a predetermined period of time that is set by the timer 18. If no receipt acknowledge signal ACK is received in the predetermined period of time at the processing step 106, the transmission power control circuit 15 increases the expected transmission power P by the amount corresponding to PI (processing step 107) and the operation goes back to the processing step 104. On the other hand, if the receipt acknowledge signal ACK is received in the predetermined period of time at the processing step 106, the object transmission data is transmitted with the expected transmission power P (processing step 108).

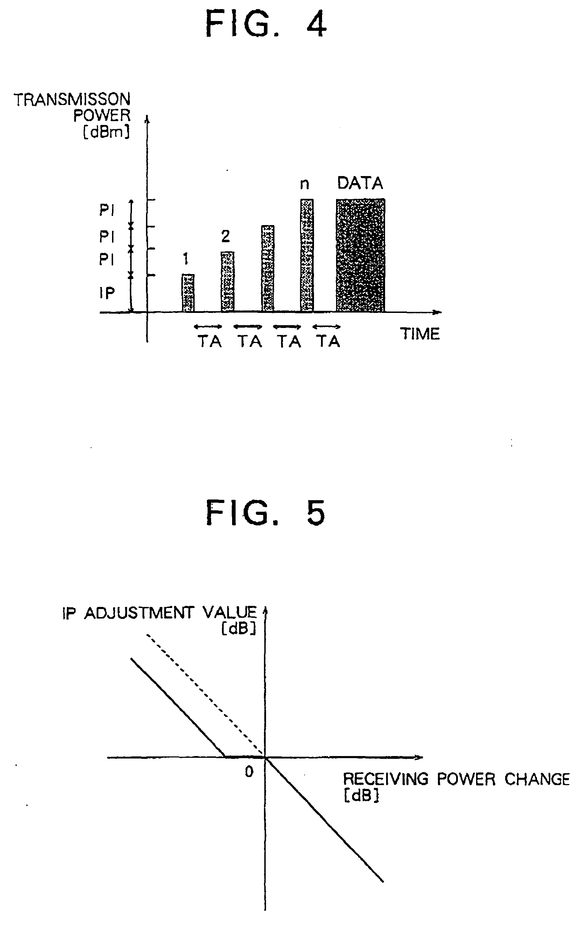

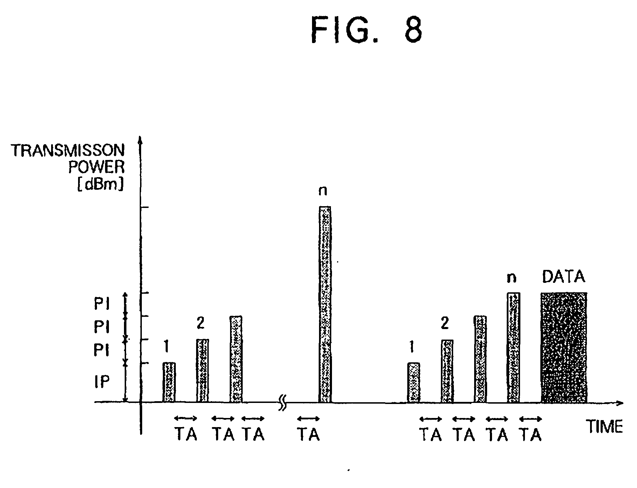

Fig. 4 is a view illustrating the transmission power as a function of time in the data transmission by using the above-mentioned transmission power control. The short test signals are transmitted before the transmission of the object data. The first test signal is transmitted with the transmission power of the initial value IP. The transmission power control circuit 15 waits for the receipt acknowledge signal ACK for a time period of TA after the transmission of the test signal. If no receipt acknowledge signal ACK is received in the time period of TA, the next test signal is transmitted with the transmission power increased by the amount corresponding to PI. Then, the transmission power control circuit 15 waits for the receipt acknowledge signal ACK for an additional time period of TA after the transmission of the second test signal. This transmit-and-wait cycle is repeated with the transmission power increased gradually. In response to receiving the receipt acknowledge signal ACK, the object transmission data is transmitted with the transmission power at that time. If the transmission power is increased excessively due to no receipt acknowledge signal ACK is received, the transmission power is reset to the initial value IP as shown in Fig. 8. The test signal is again transmitted after the transmission power is reset to the initial value IP.

The initial value IP of the transmission power is determined depending on the change in receiving power of the signal from the receiving station. Fig. 5 shows this relationship. By comparing data transmission conditions in the current communication with those in the previous communication, the initial value determining circuit 16 decreases the initial value IP depending on the amount of increase of the receiving power when the receiving power is increased. It is noted that the increase of the receiving power is due to reduced signal attenuation between the receiving station and the transmitting station. Communication can be made with a smaller transmission power. When the receiving power becomes small, the initial value IP is increased by a smaller amount than the amount corresponding to the receiving power reduction. The decrease of the receiving power is considered to be due to becoming signal attenuation larger between the receiving station and the transmitting station. However, the larger transmission power may interfere more and more with other communication channel(s) that use(s) the same frequency band range. Thus careful operation is required to increase the transmission power.

As shown in Fig. 5, the initial value determining circuit 16 does not change the initial value IP when the transmission power is reduced in a certain range. The initial value determining circuit 16 makes the adjustment value of the initial value IP smaller than the reduction amount of the receiving power when the receiving power is reduced relatively significantly. An adjustment value characteristic for the initial value IP obtained when the receiving power decreases may be any one of characteristics as long as the adjustment value is smaller than the reduction amount of the receiving power.

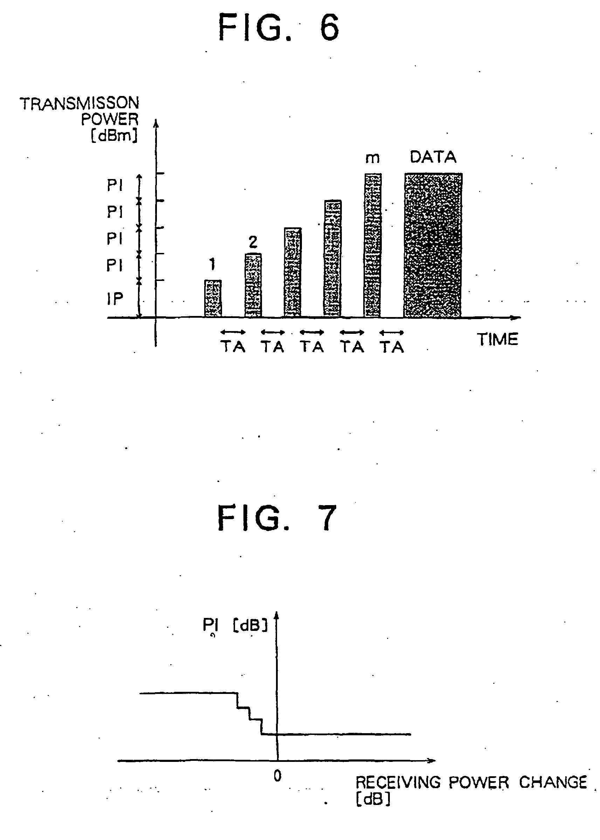

Fig. 6 is a view illustrating data transmission that requires a larger transmission power as compared with the case shown in Fig. 4. As shown in Fig. 5, the transmission power initial value IP is not so increased as the reduction of the receiving power. Therefore, the test signals will be transmitted larger number of times to achieve the desired transmission power, if the increment value of the transmission power is the same. In such a case, that problem is solved by initiating the transmission of the test signal earlier.

As for the case shown in Fig. 6, the time duration for the test signals can be reduced by means of increasing the increment value PI as shown in Fig. 7, while decreasing the number of times to transmit the test signals. In Fig. 7, the increment value PI is set larger when the receiving power is reduced. In Fig. 7, the characteristic is expressed as a multi-stage step function but any other characteristics may be used as long as the increment value PI is increased when the receiving power is reduced.

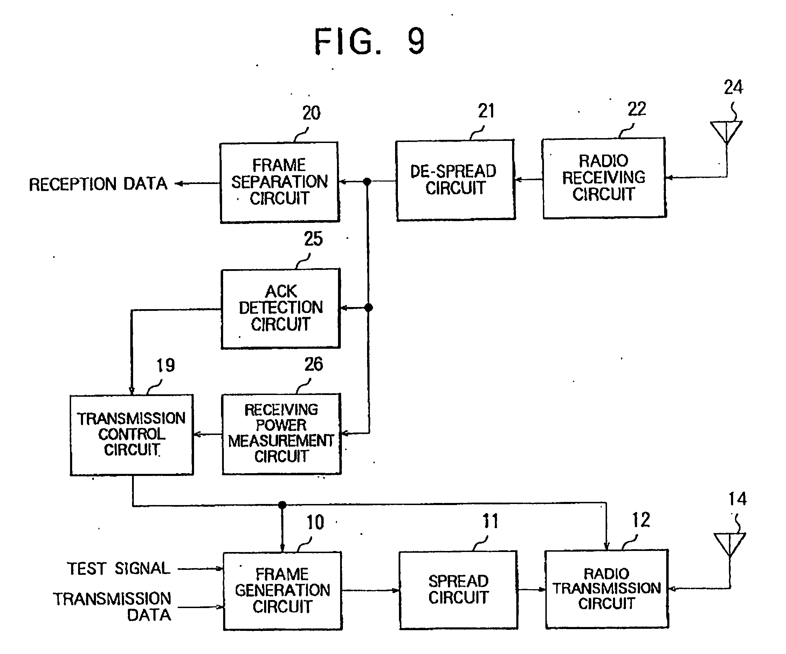

Fig. 9 is a block diagram showing an embodiment where the communication device according to the present invention is applied to spread-spectrum communication. Now, a device shown in Fig. 9 is described in comparison with the one in Fig. 2. The modulation circuit 13 in Fig. 2 is divided into three components in Fig. 9: a frame generation circuit 10, a spread circuit 11, and a radio transmission circuit 12. The demodulation circuit 23 in Fig. 2 is divided into two components in Fig. 9: a radio receiving circuit 22 and a de-spread circuit 21. The frame generation circuit 10 arranges either the object transmission data or the test signals with synchronization signals and control information in time axis. The spread circuit 11 converts an input signal into a wide-band signal according to spread spectrum communication. The de-spread circuit 21 turns the converted wide-band signal into an original form. The radio transmission circuit 12 modulates an output of the spread circuit 11 to have a radio frequency. The radio receiving circuit 22 demodulates the received radio signal. The transmission control circuit 19 is a combination of the transmission power control circuit 15, the initial value determining circuit 16, and the incremental value determining circuit 17. The frame separation circuit 20 separates the signals arranged in time axis.

When the transmission data is an audio signal, there is no data to be transmitted in a silent duration. The amount of data to be transmitted is thus significantly small. A modification of the present invention includes such a case where the transmission of the test signal is started after enough amount of data to be transmitted are accumulated. This configuration contributes to reduction of interference with other communication channel (s) that use(s) the same frequency band range.

As described above, according to the present invention, the initial value of the transmission power is controlled depending on the receiving power. More specifically, the transmission power initial value is decreased when the receiving power in the current communication is larger than that in the previous communication. On the other hand, the transmission power initial value is increased when the receiving power in the current communication is smaller than that in the previous communication. In this event, the transmission power initial value is changed at a smaller rate in increase than in decrease. Such control of the transmission power initial value allows proper transmission power settings, which results in reduction of interference with other communication channel(s) that use(s) the same frequency band range as well as reduction of the power required for the transmission.

In addition, according to the present invention, the number of update times before the transmission power reaches the desired value can be reduced by means of increasing the increment value of the transmission power when the transmission power initial value is increased in a relatively small amount. This also contributes to the reduction of interference with other communication channel(s).

Furthermore, according to the present invention, short test signals are transmitted before transmission of the object data. The object data is transmitted after the transmission power is determined, reducing interference with other communication channel(s)

## Claims

1. A transmission power control method comprising the step of measuring power of a receiving signal transmitted from a receiving station, the method being **characterized by** further comprising the steps of:
determining an initial value and an increment value of a transmission power according to measurement values of the receiving power of both the current communication and the previous communication;
transmitting a test signal with the transmission power set to the determined initial value;
increasing the power on each retransmission of the test signal by the amount corresponding to the increment value until a receiving station returns a receipt acknowledge signal; and
sending data with the last transmission power used for the test signal when the receipt acknowledge signal is detected in a certain period, and wherein, the step of determining an initial value and an incremental value further comprises:
a) when the receiving power of the current communication is larger than that of the previous communication, the initial value is decreased compared to data transmission conditions of the previous communication, and
b) when the receiving power of the current communication is smaller than that of the previous communication, the initial value is increased compared to data transmission conditions of the previous communication, and
c) the initial value is changed at a smaller rate in increase than in decrease, and
d) the increment value is made larger, when the receiving power of the current communication is smaller than that of the previous communication, than that when the receiving power of the current communication is larger than that of the previous communication.

2. A transmission power control method as claimed in claim 1, wherein the method further comprises the steps of:
setting expected transmission power as the initial value;
determining whether the number of transmissions exceeds or not a predetermined threshold value to return to the step of setting the expected transmission power as the initial value when the number of transmissions exceeds the predetermined threshold value;
transmitting the test signal with the expected transmission power when the number of transmissions are not larger than the predetermined threshold value;
waiting, for a certain period of time, for a receipt acknowledge signal from the receiving station; and
increasing the expected transmission power by the amount corresponding to the increment value to return to the step of determining the number of transmissions, when no receipt acknowledge signal is detected in the certain period of time.

3. A communication device comprising receiving means (24) for receiving a signal transmitted from a receiving station as a receiving signal; receiving power measurement means (26) for measuring receiving power of the receiving signal to produce a receiving power measurement value, and receipt acknowledge signal detection means (25) for detecting a receipt acknowledge signal from an output of the receiving means (24), the communication device being **characterized by** further comprising:
initial value determining means (16) for determining an initial value of transmission power according to the receiving power measurement value supplied from the receiving power measurement means (26) such that the initial value determining means (16) decreases the initial value of the transmission power compared to data transmission conditions of the previous communication, and that the initial value is changed at a bigger rate when receiving power of the current communication is larger than that of the previous communication, and such that the initial value determining means (16) increases the initial value compared to data transmission conditions of the previous communication when the receiving power of the current communication is smaller than that in the previous communication, the initial value being changed at a smaller rate than in decrease;
increment value determining means (17) for determining an increment value of the transmission power according to the receiving power measurement value supplied from the receiving power measurement means (26), wherein the increment value is made larger, when the receiving power of the current communication is smaller than that of the previous communication, than that when the receiving power of the current communication is larger than that of the previous communication, and
transmitting means that initiates transmission of data with the initial value of the transmission power determined by the initial value determining means (16), and increases gradually the transmission power by the amount corresponding to the increment value until the transmitting means is notified of detection of the receipt acknowledge signal, the transmitting means transmitting a test signal with the transmission power set to the determined initial value.

4. A communication device as claimed in claim 3, wherein the communication device is a spread-spectrum communication device.

5. A communication device as claimed in Claim 3 or 4, wherein said transmitting means begins transmission of the test signal at an earlier timing when the initial value of the transmission power is increased.

## Patentansprüche

1. Sendeleistungsregelungsverfahren mit einem Schritt zum Messen der Leistung eines von einer Empfangsstation zugeführten Empfangssignals;
**gekennzeichnet durch** die Schritte:
Bestimmen eines Anfangswertes und eines Inkrementwertes einer Sendeleistung gemäß Messwerten der Empfangsleistung sowohl während der aktuellen Kommunikation als auch während der vorangehenden Kommunikation;
Übertragen eines Testsignals mit der auf den bestimmten Anfangswert gesetzten Sendeleistung;
Erhöhen der Leistung bei jeder neuen Übertragung des Testsignals um einen Betrag entsprechend dem Inkrementwert, bis eine Empfangsstation ein Empfangsbestätigungssignal zurücküberträgt; und
Übertragen von Daten mit der für das Testsignal zuletzt verwendeten Sendeleistung, wenn das Empfangsbestätigungssignal innerhalb einer vorgegebenen Zeitdauer empfangen wird;
wobei der Schritt zum Bestimmen eines Anfangswertes und eines Inkrementwertes ferner die Schritte aufweist:
a) Vermindern des Anfangswertes im Vergleich zu Datenübertragungsbedingungen der vorangehenden Kommunikation, wenn die Empfangsleistung während der aktuellen Kommunikation höher ist als während der vorangehenden Kommunikation; und
b) Erhöhen des Anfangswertes im Vergleich zu Datenübertragungsbedingungen der vorangehenden Kommunikation, wenn die Empfangsleistung während der aktuellen Kommunikation niedriger ist als während der vorangehenden Kommunikation; und
c) Ändern des Anfangswertes bei einer Erhöhung des Anfangswertes um einen kleineren Wert als bei einer Verminderung des Anfangswertes; und
d) wobei der Inkrementwert für den Fall, dass die Empfangsleistung während der aktuellen Kommunikation niedriger ist als während der vorangehenden Kommunikation, größer gemacht wird als für den Fall, dass die Empfangsleistung während der aktuellen Kommunikation höher ist als während der vorangehenden Kommunikation.

2. Verfahren nach Anspruch 1, ferner mit den Schritten:
Setzen einer Nenn-Sendeleistung als Anfangswert;
Bestimmen, ob die Anzahl von Übertragungen einen vorgegebenen Schwellenwert überschreitet oder nicht, um zum Schritt zum Setzen der Nenn-Sendeleistung auf den Anfangswert zurückzuspringen, wenn die Anzahl der Übertragungen den vorgegebenen Schwellenwert überschreitet;
Übertragen des Testsignals mit der Nenn-Sendeleistung, wenn die Anzahl der Übertragungen nicht größer ist als der vorgegebene Schwellenwert;
Warten auf ein Empfangsbestätigungssignal von der Empfangsstation für eine vorgegebene Zeitdauer; und
Erhöhen der Nenn-Sendeleistung um einen Betrag entsprechend dem Inkrementwert, um zum Schritt zum Bestimmen der Anzahl der Übertragungen zurückzuspringen, wenn innerhalb der vorgegebenen Zeitdauer kein Empfangsbestätigungssignal erfasst wird.

3. Kommunikationsvorrichtung mit:
einer Einrichtung (24) zum Empfangen eines von einer Empfangsstation übertragenen Signals als Empfangssignal;
einer Empfangsleistungsmesseinrichtung (26) zum Messen der Empfangsleistung des Empfangssignals zum Erzeugen eines Empfangsleistungsmesswertes; und
einer Empfangsbestätigungssignalerfassungseinrichtung (25) zum Erfassen eines Empfangsbestätigungssignals von einem Ausgangssignal der Empfangseinrichtung (24) ;
wobei die Kommunikationsvorrichtung ferner aufweist:
eine Anfangswertbestimmungseinrichtung (16) zum Bestimmen eines Sendeleistungs-Anfangswertes gemäß dem von der Empfangsleistungsmesseinrichtung (26) zugeführten Empfangsleistungsmesswert, so dass die Anfangswertbestimmungseinrichtung (16) den Sendeleistungs-Anfangswert im Vergleich zu Datenübertragungsbedingungen der vorangehenden Kommunikation vermindert, und so, dass der Anfangswert mit einer größeren Schrittweite geändert wird, wenn die Empfangsleistung während der aktuellen Kommunikation höher ist als während der vorangehenden Kommunikation, und so, dass die Anfangswertbestimmungseinrichtung (16) den Anfangswert im Vergleich zu Datenübertragungsbedingungen der vorangehenden Kommunikation erhöht, wenn die Empfangsleistung während der aktuellen Kommunikation niedriger ist als während der vorangehenden Kommunikation, wobei der Anfangswert bei einer Erhöhung mit einer kleineren Schrittweite geändert wird als bei einer Verminderung;
eine Inkrementwertbestimmungseinrichtung (17) zum Bestimmen eines Inkrementwertes der Sendeleistung gemäß dem von der Empfangsleistungsmesseinrichtung (26) zugeführten Empfangsleistungsmesswert;
wobei der Inkrementwert für den Fall, dass die Empfangsleistung während der aktuellen Kommunikation niedriger ist als während der vorangehenden Kommunikation, größer gemacht wird als für den Fall, dass die Empfangsleistung während der aktuellen Kommunikation höher ist als während der vorangehenden Kommunikation; und
eine Sendeeinrichtung zum Übertragen von Daten mit dem durch die Anfangswertbestimmungseinrichtung (16) bestimmten Sendeleistungs-Anfangswert, und zum graduellen Erhöhen der Sendeleistung um den Betrag entsprechend dem Inkrementwert, bis die Sendeeinrichtung über die Erfassung des Empfangsbestätigungssignals informiert wird, wobei die Sendeeinrichtung ein Testsignal mit der auf den Anfangswert gesetzten Sendeleistung überträgt.

4. Kommunikationsvorrichtung nach Anspruch 3, wobei die Kommunikationsvorrichtung eine Spreizspektrumkommunikationsvorrichtung ist.

5. Kommunikationsvorrichtung nach Anspruch 3 oder 4, wobei die Sendeeinrichtung mit der Übertragung des Testsignals zu einem früheren Zeitpunkt beginnt, wenn der Sendeleistungs-Anfangswert erhöht wird.

## Revendications

1. Procédé de contrôle de la puissance d'émission, comprenant l'étape consistant à mesurer la puissance d'un signal de réception transmis à partir d'une station de réception, le procédé étant **caractérisé en ce qu'**il comprend en outre les étapes consistant à :
déterminer une valeur initiale et une valeur d'incrément d'une puissance d'émission sur la base des valeurs de mesure de la puissance de réception à la fois de la communication en cours et de la communication précédente ;
transmettre un signal d'essai avec la puissance d'émission définie à la valeur initiale déterminée ;
augmenter la puissance sur chaque retransmission du signal d'essai, de la grandeur correspondant à la valeur d'incrément jusqu'à ce qu'une station de réception retourne un signal d'accusé de réception ; et
envoyer des données avec la dernière puissance d'émission utilisée pour le signal d'essai quand le signal d'accusé de réception est détecté au cours d'une certaine période, et dans lequel l'étape de détermination d'une valeur initiale et d'une valeur d'incrément comprend en outre les étapes consistant à :
a) quand la puissance de réception de la communication en cours est supérieure à celle de la communication précédente, la valeur initiale est réduite comparée à des conditions de transmission de données de la communication précédente ; et
b) quand la puissance de réception de la communication en cours est inférieure à celle de la communication précédente, la valeur initiale est augmentée comparée à des conditions de transmission de données de la communication précédente ; et
c) la valeur initiale est modifiée à une vitesse inférieure dans le sens en augmentation que dans le sens en diminution ; et
d) la valeur d'incrément est plus importante quand la puissance de réception de la communication en cours est inférieure à celle de la communication précédente, que quand la puissance de réception de la communication en cours est supérieure à celle de la communication précédente.

2. Procédé de contrôle de la puissance d'émission selon la revendication 1, dans lequel le procédé comprend en outre les étapes consistant à :
définir une puissance d'émission attendue en tant que la valeur initiale ;
déterminer si le nombre de transmissions dépasse - ou non - une valeur de seuil prédéterminée pour retourner à l'étape de définition de la puissance d'émission attendue en tant que la valeur initiale, quand le nombre de transmissions dépasse la valeur de seuil prédéterminée ;
transmettre le signal d'essai avec la puissance d'émission attendue quand le nombre de transmissions ne dépasse pas la valeur de seuil prédéterminée;
attendre, pendant une certaine période de temps, un signal d'accusé de réception en provenance de la station de réception ; et
augmenter la puissance d'émission attendue, de la grandeur correspondant à la valeur d'incrément pour retourner à l'étape de détermination du nombre de transmissions, quand aucun signal d'accusé de réception n'est détecté au cours de la certaine période de temps.

3. Dispositif de communication comprenant des moyens de réception (24) pour recevoir un signal transmis à partir d'une station de réception en tant qu'un signal de réception, des moyens de mesure de puissance de réception (26) pour mesurer une puissance de réception du signal de réception pour produire une valeur de mesure de puissance de réception, et des moyens de détection de signal d'accusé de réception (25) pour détecter un signal d'accusé de réception à partir d'une sortie des moyens de réception (24), le dispositif de communication étant **caractérisé en ce qu'**il comprend en outre :
des moyens de détermination de valeur initiale (16) pour déterminer une valeur initiale de la puissance d'émission sur la base de la valeur de mesure de puissance de réception fournie par les moyens de mesure de puissance de réception (26) de telle sorte que les moyens de détermination de valeur initiale (16) diminuent la valeur initiale de la puissance d'émission comparée à des conditions de transmission de données de la communication précédente, et de telle sorte que la valeur initiale est modifiée à une vitesse plus rapide quand la puissance de réception de la communication en cours est supérieure à celle de la communication précédente, de telle sorte que les moyens de détermination de valeur initiale (16) augmentent la valeur initiale comparée à des conditions de transmission de données de la communication précédente quand la puissance de réception de la communication en cours est inférieure à celle de la communication précédente, la valeur initiale étant modifiée à une vitesse moins rapide que dans le sens en diminution ; des moyens de détermination de valeur d'incrément (17) pour déterminer une valeur d'incrément de la puissance d'émission sur la base de la valeur de mesure de puissance de réception fournie par les moyens de mesure de puissance de réception (26), dans lequel la valeur d'incrément est plus importante quand la puissance de réception de la communication en cours est inférieure à celle de la communication précédente, que quand la puissance de réception de la communication en cours est supérieure à celle de la communication précédente ; et
des moyens de transmission qui initient la transmission de données avec la valeur initiale de la puissance d'émission déterminée par les moyens de détermination de valeur initiale (16), et qui augmentent progressivement la puissance d'émission de la grandeur correspondant à la valeur d'incrément jusqu'à ce que les moyens de transmission soient avertis de la détection du signal d'accusé de réception, les moyens de transmission transmettant un signal d'essai avec la puissance d'émission définie à la valeur initiale déterminée.

4. Dispositif de communication selon la revendication 3, dans lequel le dispositif de communication est un dispositif de communication à spectre étalé.

5. Dispositif de communication selon la revendication 3 ou 4, dans lequel lesdits moyens de transmission commencent à transmettre le signal d'essai à un moment antérieur au moment où la valeur initiale de la puissance d'émission est augmentée.
